# EUROPÄISCHE PATENTSCHRIFT

(11) **EP 2 024 127 B1**
(45) Veröffentlichungstag und Bekanntmachung des Hinweises auf die Patenterteilung: **30.08.2017**
(21) Anmeldenummer: 07718406.7
(22) Anmeldetag: 24.04.2007
(51) Int. Cl.: B23K 11/25, G01N 21/88

(54) **VORRICHTUNG ZUM AUSWERTEN VON ABBILDERN VON SCHWEISSPUNKTEN AUF EINEM TRÄGERMATERIAL**
DEVICE FOR EVALUATING IMAGES OF WELD SPOTS ON A CARRIER MATERIAL
DISTPOSITIF D'ÉVALUATION ET DE REPRÉSENTATION DES POINTS DE SOUDURE D'UN MATÉRIAU PORTEUR

(30) Priorität: 02.06.2006 AT 9622006
(43) Veröffentlichungstag der Anmeldung: 18.02.2009
(73) Patentinhaber: Fronius International GmbH, 4643 Pettenbach (AT)
(72) Erfinder: LOIPETSBERGER, Mario, 4690 Rüstorf (AT)
(74) Vertreter: Sonn & Partner Patentanwälte
(86) Internationale Anmeldenummer: PCT/AT2007/000190
(87) Internationale Veröffentlichungsnummer: WO 2007/140492

(56) Entgegenhaltungen:
- US-A- 4 578 561
- US-A- 5 051 872
- US-B1- 6 414 261

## Beschreibung

Die Erfindung betrifft ein Schweißwerkzeug für eine Punktschweißanlage, insbesondere Schweißzange, gemäß dem Oberbegriff des Patentanspruchs 1 mit zumindest einem Haltearm für eine Elektrode zum Widerstandsschweißen, und einer Positioniervorrichtung für ein an der Elektrode vorbeiführbares Trägermaterial, insbesondere ein Band zur Erzeugung eines Abbilds eines Schweißpunktes, insbesondere einer Schweiß-linse, mit einer Auswerteeinrichtung zur Analyse des Abbilds des Schweißpunktes mit einer optischen Bilderfassungseinheit, umfassend eine zumindest aus einem Erfassungsmittel und einem Objektiv bestehende Kamera.

Ein Schweißwerkzeug für eine Punktschweißanlage der gegenständlichen Art ist aus der WO 2004/022278 A1 bekannt geworden, wobei zwischen Elektrode und Werkstück ein Band angeordnet wird, welches durch spezielle Beschichtungen für eine gute elektrische Leitfähigkeit sorgt. Darüberhinaus wird beim Schweißprozess ein Abdruck auf dem Band hinterlassen, welcher zur Beurteilung der Qualität des Schweißpunkts erfasst und ausgewertet werden kann. Abgesehen von der Erwähnung einer Kamera zur Auswertung des Abbilds auf dem Band werden jedoch keine Details über die Erfassungs- und Auswerteeinrichtung dargelegt.

Aus der US 6,414,261 B1 ist ein Verfahren zur Qualitätsüberwachung einer Punktschweißung bekannt, bei dem die Analyse eines Schweißpunktes durch Auswertung von Bilddaten erfolgt, die mittels einer Videokamera aufgenommen wurden. Hierbei wird eine Oberseite des Werkstücks, an dem eine Schweißung durchgeführt wurde, von einer Videokamera aufgenommen, worauf eine Berechnung von Bildinformationen zur Beurteilung der Qualität der Punktschweißung durchgeführt wird. Nachteilig ist hierbei, dass im Bereich der Schweißstelle am Werkstück keine homogenen Lichtverhältnisse herrschen, da die Oberseite des Werkstücks nach außen frei liegt und die Beleuchtung zumindest teilweise durch das Umgebungslicht bestimmt wird. Weiters wird der Informationsgehalt im aufgezeichneten Bildmaterial durch die Spiegelungen an der glänzenden bzw. spiegelnden Oberfläche des Metalls und/oder durch Schattenwurf durch die Auswerteeinrichtung oder Komponenten der Schweißanlage beeinträchtigt bzw. verfälscht, wodurch eine genaue und differenzierte Auswertung der Qualität der Schweißstelle erschwert ist.

Ein wesentlicher Nachteil dabei sowie bei ähnlichen aus dem Stand der Technik bekannten Qualitätsüberwachungsverfahren von Punktschweißungen ist auch, dass die Videokamera nicht an der Punktschweißzange befestigt ist. Das heißt, dass die Videokamera durch eine entsprechende Positioniervorrichtung an der entsprechenden Oberfläche der Punktschweißung positioniert werden muss. Ebenso kann dementsprechend auch das Werkstück beispielsweise unter die Videokamera positioniert werden. Somit ist mit der Analyse des Schweißpunktes mit derartigen Systemen ein erheblicher Aufwand erforderlich und dementsprechend auch ein zeitlicher Aufwand damit verbunden.

Weiters ist aus der WO 2004/022278 A1 ein Verfahren zur Qualitätsüberwachung von Punktschweißungen bekannt, bei dem zwischen den Elektroden und den zu verschweißenden Blechen ein Band bzw. eine Folie eingelegt wird, wobei das Band bzw. die Folie derart ausgebildet wird, dass durch den Schweißprozess eine spiegelbildliche, insbesondere proportionale Abbildung bzw. ein Abdruck des am Werkstück geschaffenen Schweißpunktes am Band bzw. an der Folie entsteht. Anschließend kann diese spiegelbildliche Abbildung bzw. dieser Abdruck am Band bzw. auf der Folie von dem Auswertemittel erfasst und ausgewertet werden, wobei von dem Auswertemittel oder einer Steuer- und/oder Auswertevorrichtung eines Schweißgerätes durch die Abbildung bzw. den Abdruck auf die Größe, Form und Lage des Schweißpunktes geschlossen werden kann. Nachteilig ist bei diesem Verfahren wiederum, dass die optische Erfassung der Abbildung bzw. des Abdrucks mit herkömmlichen Kameras bzw. Objektiven erfolgt und somit die Qualität der aufgenommenen Bilder durch schwankende bzw. inhomogene Umgebungsbeleuchtung und Spiegelungen im Abdruck stark beeinträchtigt werden kann.

Die US 5,051,872 A zeigt eine Beleuchtungseinrichtung zur optischen Qualitätsprüfung von Gegenständen und Oberflächen.

Die aus dem Stand der Technik bekannten Verfahren und Vorrichtungen zur Qualitätsüberwachung von Punktschweißungen weisen somit den Nachteil auf, dass eine automatisierte Auswertung des Schweißergebnisses unmittelbar nach Durchführung der Schweißung und bei definierten und gleich bleibenden Lichtverhältnissen bzw. Umgebungsbedingungen und unabhängig vom Werkstück nicht möglich ist.

Die Aufgabe der vorliegenden Erfindung besteht daher in der Schaffung eines Schweißwerkzeugs, wodurch die optische Qualitätsprüfung von Punktschweißverbindungen verbessert werden kann. Eine weitere Teilaufgabe der Erfindung ist es, die Effizienz des Fertigungsablaufs einer Punktschweißanlage mit Qualitätsprüfung zu verbessern, insbesondere eine automatisierte Qualitätsprüfung im unmittelbaren Bereich des Schweißplatzes zu ermöglichen.

Die erfindungsgemäße Aufgabe wird dadurch gelöst, dass die Bilderfassungseinheit eine Beleuchtungseinrichtung mit einem Diffusor zur diffusen und homogenen Beleuchtung des Abbilds der Punktschweißung auf dem Band aufweist, wobei die Beleuchtungseinrichtung zur indirekten Beleuchtung des Bandes in Richtung der Kamera ausgerichtet ist und eine Lichtquelle aufweist, die für eine großflächige Bestrahlung des Bandes angeordnet ist, wobei der Diffusor einen Reflektor aufweist, der an einer Reflexionsfläche die von der Lichtquelle erzeugten Lichtstrahlen in Richtung des Bandes reflektiert. Daraus ergibt sich der Vorteil, dass das Abbild auf dem Band gleichmäßig ausgeleuchtet ist, so dass eine unverfälschte und möglichst naturgemäße Aufzeichnung des Abbilds mit einer Kamera möglich ist, um anschließend eine elektronische Bildverarbeitung zur Beurteilung der Qualität einer Schweißverbindung durchführen zu können. Durch eine gleichmäßige und diffuse Beleuchtung des Abbilds wird verhindert, dass helle und/oder dunkle Bereiche, insbesondere Schatten, und/oder Spiegelungen im Bereich des Abbilds bzw. des Aufzeichnungsbereichs der Kamera entstehen. Der Diffusor ermöglicht eine derartige, homogene Ausleuchtung des Abbilds, so dass im Wesentlichen gleich bleibende Lichtverhältnisse geschaffen werden und zur Bewertung unterschiedlicher Abbilder auf dem Band gleiche Maßstäbe bzw. Analysekriterien verwendet werden können. Somit ist eine objektivere und differenziertere Bewertung der Qualität von Schweißverbindungen möglich. Dadurch, dass die Beleuchtungseinrichtung zur indirekten Beleuchtung des Bandes in Richtung der Kamera ausgerichtet ist, kann in einfacher Weise diffuses Licht erzeugt werden, das eine homogene Beleuchtung des Bandes ermöglicht.

Dadurch, dass die Beleuchtungseinrichtung eine Lichtquelle aufweist, die für eine großflächige Bestrahlung des Bandes angeordnet ist, wobei der Diffusor einen Reflektor aufweist, der an einer Reflexionsfläche die von der Lichtquelle erzeugten Lichtstrahlen in Richtung des Bandes reflektiert, wird eine diffuse Bestrahlung des Bandes mit einer hohen Leuchtstärke ermöglicht. Da die Lichtquelle nicht direkt auf das reflektierende Band strahlt, können Spiegelungen bzw. helle Bereiche an der Oberfläche des Bandes verhindert werden. Ein derartiges Schweißwerkzeug ist vorteilhaft, da mit diesem das Abbild einer Punktschweißverbindung unmittelbar nach Durchführung des Schweißprozesses durch die Auswertevorrichtung aufgezeichnet bzw. untersucht werden kann.

Durch einen Reflektor, der aus einem lichtundurchlässigen bzw. opaken Material gebildet ist, welches einen niedrigen Absorptionsgrad für sichtbare Strahlung aufweist, wird eine besonders effiziente Beleuchtung des Bandes ermöglicht, da die Leistung der auf den Reflektor auftreffenden Strahlung und der reflektierten Strahlung in etwa gleich groß sind, so dass die erzeugte Strahlungsenergie zu einem sehr hohen Anteil zur Beleuchtung des Bandes genutzt werden kann.

Eine besonders kostengünstige und zweckmäßige Ausgestaltung kann erzielt werden, wenn das Material des Reflektors aus der Gruppe der Kunststoffe ausgewählt wird.

Wenn die Reflexionsfläche hell gefärbt ist bzw. hell reflektierende Eigenschaften aufweist, wird am Band eine möglichst natürliche bzw. nicht farbverfälschte Beleuchtung ermöglicht.

Besonders vorteilhaft ist eine Ausgestaltung, bei der die Reflexionsfläche weiß, insbesondere mattweiß, ausgebildet ist, da an einer weißen Fläche das gesamte Spektrum des sichtbaren Lichts, d.h. weißes Licht, reflektiert wird, wodurch eine natürliche Farbgebung an der Oberfläche des Bandes bei gleichzeitig hoher Beleuchtungsstärke erfolgen kann.

Eine silberfarbig, insbesondere mattsilberfarbig, ausgebildete Reflexionsfläche hat sich aufgrund geeigneter Reflexionseigenschaften ebenfalls als vorteilhaft erwiesen.

Ebenfalls von Vorteil ist es, wenn die Reflexionsfläche zumindest bereichsweise eine Wölbung aufweist und einen Innenraum kuppelartig umschließt. Ein unterhalb der Reflexionsfläche liegendes Band kann somit von mehreren Seiten bzw. vollumfänglich beleuchtet werden, wodurch eine sehr homogene und spiegelungsfreie Beleuchtung des Bandes ermöglicht wird.

Es ist auch vorteilhaft, wenn die Reflexionsfläche mit der Wölbung eine Ausnehmung in einem einen Dom bildenden Gehäuse begrenzt. Somit kann das Gehäuse der Beleuchtungseinrichtung gleichzeitig als Reflektor bzw. Reflexionsfläche dienen, wobei durch den Dom Lichteinstrahlungen von außerhalb des Gehäuses vollständig abgeschirmt werden. Die Beleuchtung eines Abbilds am Band kann somit ausschließlich durch die Beleuchtungseinrichtung erfolgen, wodurch eine kontrollierbare Beleuchtung ermöglicht wird und die Reproduzierbarkeit von Messergebnissen ermöglicht wird. Als besonders vorteilhaft hat sich hierbei erwiesen, wenn der Dom an einer der Reflexionsfläche gegenüberliegenden Unterseite eine Öffnung aufweist, in deren Bereich ein Band vorbeigeführt werden kann.

Dadurch, dass der Dom im Wesentlichen halbschalenförmig ausgebildet ist, wobei sich die an der Wand des Domes befindliche Reflexionsfläche vorzugsweise im Wesentlichen halbkugelförmig erstreckt, kann durch gegenüberliegende Anordnung von Leuchtmitteln im Seitenbereich des Doms ein besonders kompakter Aufbau einer indirekten Beleuchtungseinrichtung geschaffen werden.

Dabei weist der Dom vorzugsweise an einer der Reflexionsfläche gegenüberliegenden Unterseite eine Öffnung auf, in deren Bereich das Band vorbeigeführt werden kann.

Eine Ausführungsvariante, bei der der Reflektor durch das Material des Gehäuses gebildet ist, ist aufgrund des einfachen und kostengünstigen Aufbaus von Vorteil.

Durch eine Ausführungsvariante, bei der der Reflektor auf eine Innenseite des Gehäuses als Beschichtung oder Lackierung aufgebracht ist, können von der Beschaffenheit des Gehäuses unabhängige Beleuchtungseigenschaften erzielt werden, die gegebenenfalls änderbar bzw. einstellbar sind. Somit kann der Reflektor speziell auf ein Band abgestimmt sein, um ein optimales Beleuchtungsergebnis zu erzielen.

Dadurch, dass die Lichtquelle der Reflexionsfläche im Bereich der Wölbung gegenüberliegend angeordnet ist wird eine sehr gleichmäßige, indirekte Bestrahlung des Bandes ermöglicht.

Durch eine Ausgestaltung, bei der die Lichtquelle durch zumindest eine Leuchtdiode, bevorzugt einen LED-Ring aus mehreren Leuchtdioden, gebildet ist, wird der Vorteil erreicht, dass eine Wartung der Beleuchtungseinrichtung durch die hohe Lebensdauer von Leuchtdioden selten nötig ist und die Wärmeentwicklung und Leistungsaufnahme durch die Beleuchtungseinrichtung gering ist.

Weiters ist ein kompakter Aufbau der Beleuchtungseinrichtung möglich, wobei insbesondere durch einen LED-Ring mit zumindest drei kreisförmig angeordneten Leuchtdioden, die in einem Seitenbereich des Doms angeordnet sind, eine kompakte und beleuchtungstechnisch effiziente Ausgestaltung gegeben ist.

Von Vorteil ist eine Ausführungsvariante, bei der die Bilderfassungseinheit ein Nadelloch- bzw. Pinhole-Objektiv mit einem Loch umfasst. Somit ist es möglich, dass nur ein sehr kleiner Bereich - dem Querschnitt des Nadellochs entsprechend -, beispielsweise innerhalb des Doms, nicht reflektierend ausgebildet ist, wobei das Pinhole-Objektiv als Teil des Diffusors gebildet sein kann. Durch das im Querschnitt verhältnismäßig kleine Loch im Objektiv, also dem Pinhole, wird verhindert, dass es am Abbild des Bandes zu störenden Verdunkelungen kommt, wobei diese Verdunkelungen aus dem Spiegelbild der Kamera durch das Loch resultieren. Die Qualität des durch die Kamera aufgezeichneten Bildes kann somit deutlich verbessert werden, da im Vergleich zu herkömmlichen Linsenobjektiven die Verdunkelung am Bild durch das Spiegelbild der Kamera verschwindend klein ist.

Dadurch, dass das Objektiv einen das Loch umgebenden Reflektor aufweist, wird das Spiegelbild der Kamera am Abbild des Bandes besonders effektiv verhindert.

Eine Ausgestaltung, bei der das Objektiv der Kamera an einer einem Band gegenüberliegenden Oberseite des Doms angeordnet ist, ist aufgrund der unverzerrten und proportionalen Erfassung des Abbilds durch die Kamera von Vorteil, da die Auswertung der aufgezeichneten Bildinformationen erleichtert wird.

Des Weiteren ist eine Ausführungsvariante vorteilhaft, bei der vor der Bilderfassungseinheit ein transparentes Schutzelement, beispielsweise aus Kunststoff oder Glas, zum Schutz der Bilderfassungseinheit vor Verunreinigungen angeordnet ist. Dadurch können Verunreinigungen nicht in den Innenraum des Doms eindringen und diese die Beleuchtungseigenschaften im Innenraum nicht beeinträchtigen. Weiters ist eine Reinigung des Innenraums der Beleuchtungseinrichtung somit nicht notwendig.

Von Vorteil ist weiters eine Ausgestaltung, bei der die Auswertevorrichtung an einer Innenseite des Haltearms, an der das mit dem Abbild versehene Band nach einem Schweißvorgang vorbeigeführt wird, angeordnet ist, da das Band entlang der Oberfläche von der Schweißstelle weggefördert werden kann und gleichzeitig im Nahbereich der Schweißstelle durch die Auswertevorrichtung eine Verarbeitung des Abbilds am Band erfolgen kann. Eine eigene Arbeitsstation zur Analyse des Abbilds am Band kann somit entfallen, wodurch der Fertigungsablauf einer Schweißverbindung vereinfacht wird und die Herstellkosten verringert werden.

Vorteilhaft ist auch eine Ausgestaltung, bei der der Haltearm in an sich bekannter Weise L-förmig ausbildet ist und eine Abwinkelung aufweist, und die Auswertevorrichtung in einem Bereich der Abwinkelung angeordnet ist. Somit ist die Auswertevorrichtung im unmittelbaren Nahbereich der Elektrode bzw. Schweißstelle angeordnet, wobei die Auswertevorrichtung durch die Anordnung im Bereich der Abwinkelung die Bewegungsfreiheit des Schweißwerkzeugs kaum einschränkt, so dass durch die Auswertevorrichtung keine Beschränkung des Einsatzbereichs des Schweißwerkzeugs gegeben ist und eine unmittelbare Auswertung von Schweißpunkten nach dessen Erzeugung erfolgen kann. Dadurch, dass die Positioniervorrichtung zur Anordnung des Bandes an der Innenseite des Haltearms unterhalb der Auswertevorrichtung, insbesondere unterhalb der Öffnung des Doms, nach Durchführung eines Schweißvorgangs ausgebildet ist, kann die Analyse bzw. Verarbeitung des Abbilds am Band in vorteilhafter Weise automatisiert werden, wodurch eine kostengünstige und effiziente Beurteilung der Qualität einer Punktschweißverbindung ermöglicht wird.

Die vorliegende Erfindung wird anhand der beigefügten, schematischen Zeichnungen näher erläutert.

Darin zeigen:
- Fig. 1: eine Punktschweißanlage mit einem erfindungsgemäßen Schweißwerkzeug, welches eine erfindungsgemäße Auswerteeinrichtung aufweist, in Seitenansicht;
- Fig. 2: eine Schrägansicht auf miteinander verschweißte Bleche im Bereich eines Schweißpunktes in teilweise geschnittener Darstellung;
- Fig. 3: eine Ausführungsvariante der erfindungsgemäßen Auswerteeinrichtung in schematischer Schnittdarstellung; und
- Fig. 4: eine Ausführungsvariante der erfindungsgemäßen Auswerteeinrichtung in Explosionsdarstellung.

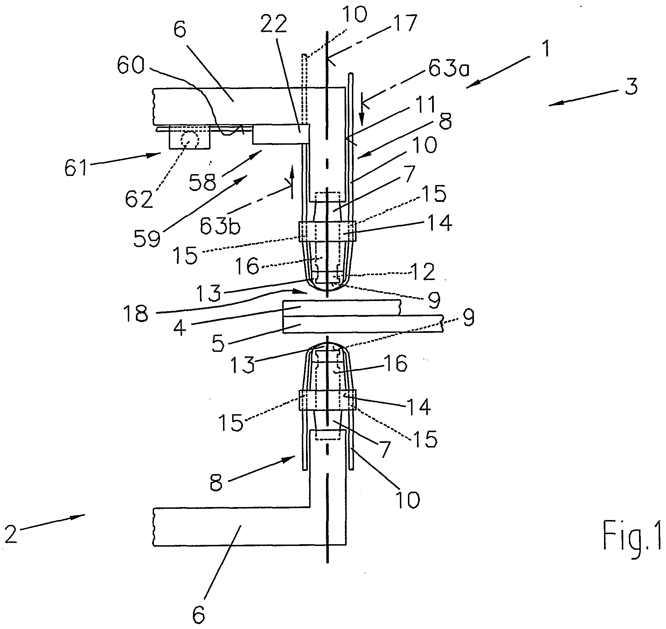

In Fig. 1 ist ein Schweißwerkzeug 1 in Form einer Schweißzange 2 einer Punktschweißanlage 3 zum Widerstandsschweißen von zumindest zwei Bauteilen wie z.B. Blechen 4, 5 gezeigt. Das Schweißwerkzeug 1 wird bevorzugt für Roboteranwendungen zur automatisierten Herstellung von Punktschweißverbindungen eingesetzt. Das Schweißwerkzeug 1 weist beispielsweise zwei abgewinkelte bzw. L-förmige Haltearme 6 zur Aufnahme je einer Elektrode 7 auf, wobei die Elektrode 7 mit einer nicht dargestellten Stromquelle der Punktschweißanlage 3 verbunden ist. Das Schweißwerkzeug 1 ist weiters zur Aufnahme und Führung eines Bandes 10 ausgebildet, welches über zumindest einen Haltearm 6 an einer Spitze 9 der Elektrode 7 vorbeigeführt wird. Das Trägermaterial 8 ist bevorzugt durch eine Folie bzw. ein Band 10 gebildet, das verformbar ist und das in dessen Längsrichtung entlang einer Oberfläche 11 der Haltevorrichtung 6 verschiebbar ist. Zur Verschiebung bzw. Förderung des Bandes 10 weist das Schweißwerkzeug 1 bzw. die Schweißanlage 3 beispielsweise eine an späterer Stelle beschriebene Positioniervorrichtung zur Förderung und/oder zum Auf- und Abwickeln des an der Elektrode 7 vorbeilaufenden Bandes 10 auf.

Die Führung des Bandes 10 um die Elektrode 7 kann auf die verschiedensten Arten erfolgen, weshalb anschließend lediglich ein Ausführungsbeispiel kurz erläutert wird. Bei diesem ist um die Elektrode 7 im Bereich einer Elektrodenkappe 12 bzw. einer Kontaktfläche der Elektrode 7 mit dem Blech 4, 5 ein dielektrischer Distanzhalter 13 angeordnet. Der Distanzhalter 13 ist beispielsweise beweglich an der Elektrode 7 befestigt, so dass über diesen die Bleche 4, 5 mit zusätzlichem Druck über den Distanzhalter 13 beaufschlagt werden können. Weiters wird durch die bewegliche Lagerung des Distanzhalters 13 erreicht, dass dieser das Band 10 nach einem Schweißprozess von der Elektrode 7 abhebt, d.h., dass der Distanzhalter 13 während oder nach dem Öffnen der Schweißzange 2 das Band 10 von der Spitze 9 bzw. der Elektrodenkappe 12 selbständig abhebt, wogegen beim Schließen der Schweißzange 2 der Distanzhalter 13 gegenüber der Elektrode 7 verschoben wird, wodurch das Band 10 an der Elektrode 7 zum Anliegen kommt.

Weiters kann das Schweißwerkzeug 1 ein Stützelement 14 mit Führungskanälen 15 zur Aufnahme des Bandes 10 aufweisen. Zwischen dem Stützelement 14 und dem Distanzhalter 13 ist ein Verstellmittel 16, insbesondere ein Federelement, angeordnet, wodurch der Distanzhalter 13 mit entsprechender Druckbeaufschlagung in Richtung einer Längsmittelachse 17 der Elektrode 7 verschoben werden kann. Das Verstellmittel 16 ist hierzu verformbar bzw. federelastisch ausgebildet.

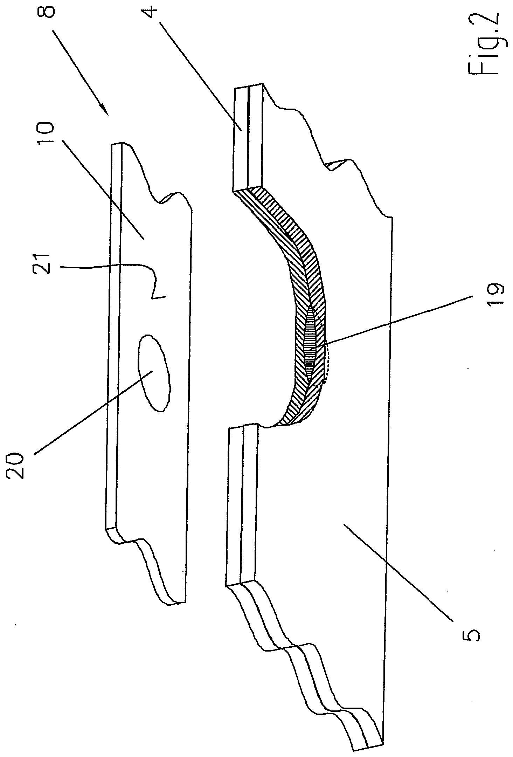

Durch das Schweißwerkzeug 1 werden während des gesamten Punktschweißprozesses die Bleche 4, 5 über die Elektroden 7 mechanisch aneinandergepresst. Beim Punktschweißprozess wird das zu verbindende Metall zweier Bauteile durch beidseitiges Aufschmelzen und anschließendes Erstarren verbunden, wobei durch den großen ohmschen Widerstand zwischen den Bauteilen bei Einsetzen eines Stromflusses eine hohe Leistung in Wärmeenergie umgesetzt wird, was zum Schmelzen der Metalle führt. Nach Erstarren der Schmelze an einer Schweißstelle 18 sind die Bleche 4, 5 durch einen Schweißpunkt 19 bzw. eine Schweißlinse, wie schematisch in Fig. 2 dargestellt, miteinander verbunden.

Um nun eine Beurteilung der Qualität des Schweißpunktes 13 vornehmen zu können, ist das Band 10 vorgesehen, das während des Schweißvorgangs direkt über der Schweißstelle 18 angeordnet ist. Durch die beim Verschweißen der Bauteile entstehende Abstrahlung bzw. Wirkung, insbesondere die über die geometrische Ausdehnung des Schweißpunktes 19 abgegebene Wärme, wird ein spiegelbildliches Abbild 20 des Schweißpunktes 19 am Band 10 erzeugt, wobei das Abbild 20 an einer dem Blech 4, 5 zugewandten Seite 21 im Bereich der Spitze 9 der Elektrode 7 angeordnet ist. Nach erfolgter Schweißung kann über die Positionierungsvorrichtung eine Verschiebung des Bandes 10 in Längsrichtung desselben erfolgen, so dass eine Analyse des Bandes 10 durch eine Auswertevorrichtung 22 unabhängig von der Position der Bleche 4, 5 und des Bearbeitungsorts erfolgen kann. Ein derartiges Verfahren und die zu diesem gehörigen Vorrichtungen sind bereits aus der WO 2004/022278 A1 der Anmelderin bekannt, weshalb für nähere Details zu möglichen Ausgestaltungen der Schweißanlage 3, des Schweißwerkzeugs 1 und für Verfahrensabläufe auf diese Patentanmeldung verwiesen wird. Zumindest Teile der in der WO 2004/022278 A1 beschriebenen Erfindung können Bestandteil des vorliegenden, erfindungsgemäßen Gegenstands sein.

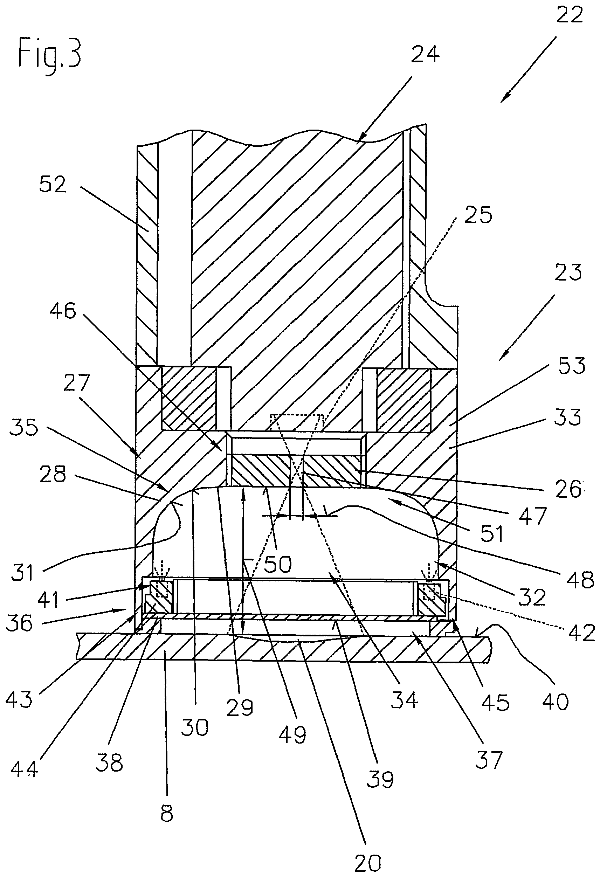

In Fig. 3 ist eine mögliche Ausführungsvariante der erfindungsgemäßen Auswertevorrichtung 22 dargestellt. Die Auswertevorrichtung 22 ist Teil eines Systems zur Qualitätsüberwachung von Punktschweißungen. Dieses System ist zur Analyse der Eigenschaften von Schweißpunkten 19, wie z.B. geometrische Größen, wie Lage, Form und Größe der Schweißpunkte 19 ausgebildet. Zur Analyse werden Bildinformationen des vom Band 10 aufgezeichneten Abbilds 20 herangezogen, wobei die optische Erfassung des Abbilds 20 durch die Auswertevorrichtung 22 erfolgt. Die Auswertevorrichtung 22 weist eine Bilderfassungseinheit 23 mit zumindest einer Kamera 24 auf. Die Kamera 24 weist ein Erfassungsmittel 25 und ein Objektiv 26 auf, wobei das Erfassungsmittel 25 durch einen Sensor zur Umsetzung von Licht in Bilddaten ausgebildet ist und das Objektiv 26 zur Einstellung der Abbildungseigenschaften des Abbilds 20 ausgebildet ist. Das Erfassungsmittel 25 ist bevorzugt durch einen Halbleiterdetektor, wie z.B. einem CCD (Charge Coupled Device)- oder einem CMOS (Complementary Metal Oxide Semiconductor)-Kamera-Chip gebildet, der das Abbild 20 des Schweißpunktes 19 erfasst, welches anschließend von einer Elektronik digitalisiert wird. Das Erfassungsmittel 25 und das Objektiv 26 können eine gemeinsame Baueinheit bilden, wobei eine nicht näher dargestellte Elektronik der Kamera 24 an einer anderen Stelle in der Auswertevorrichtung 22 angeordnet und mit dem Erfassungsmittel 25 über Leitungen, Netzwerke, Bussysteme, usw. verbunden sein kann. Somit kann eine kompaktere Bauweise der Auswerteeinrichtung 22 erreicht werden. Das System zur Qualitätsüberwachung bzw. die Auswertevorrichtung 22 kann eine Auswertelogik aufweisen, welche die Analyse der Eigenschaften des Abbilds 20 durchführt, wobei diese Auswertelogik bevorzugt durch eine in einem Speicher hinterlegte Programmlogik gebildet ist. Beispielsweise ist die Auswertelogik auf einem Computer installiert, welcher die Bildinformationen über ein Netzwerk (Internet, Intranet, ...) von der Auswerteeinheit 22 erhält. Derartige Auswertelogiken sind dem auf dem Gebiet der industriellen Bildverarbeitung tätigen Fachmann bekannt, weshalb auf diese nicht näher eingegangen wird.

Um durch Auswertelogiken eine exakte und vielseitige Qualitätsbestimmung von Schweißpunkten 19 durchführen zu können, ist eine kontrollierte Beleuchtung des Bandes 10 bzw. des Abbilds 20 notwendig. Dies wird durch die erfindungsgemäße Bilderfassungseinheit 23 erreicht, wobei diese eine Beleuchtungseinrichtung 27 aufweist, die zur diffusen und homogenen Beleuchtung bzw. einer so genannten Auflichtbeleuchtung des Abbilds 20 einer Punktschweißung auf einem Band 10 ausgebildet ist. Durch die diffuse Beleuchtung kommt es an stark reflektierenden Bändern 10 zu einer reflexionsfreien und gleichmäßigen Farbgebung am Abbild 20, so dass keine optischen Informationen über das Abbild 20 durch die Aufzeichnung mit der Kamera 24 verfälscht werden bzw. verloren gehen. Somit kann über das Abbild 20 in sehr feiner Abstufung und zuverlässiger Weise auf die Eigenschaften eines Schweißpunktes 19 rückgeschlossen werden.

Die Beleuchtungseinrichtung 27 weist zur Erzeugung von diffusem Licht einen Diffusor 28 auf, der auftreffende Lichtstrahlung in unterschiedliche Richtungen streut. In der gezeigten Ausführungsvariante ist die Beleuchtungseinrichtung 27 zur indirekten Beleuchtung des Bandes 10 ausgebildet, zu welchem Zweck der Diffusor 28 einen Reflektor 29 aufweist, der die auf eine Reflexionsfläche 30 auftreffenden Lichtstrahlen in Richtung des Bandes 10 reflektiert. Der Reflektor 29 ist hierbei aus lichtundurchlässigem bzw. opakem Material gebildet, welches einen niedrigen Absorptionsgrad von elektromagnetischer Strahlung im Frequenzbereich des Lichts aufweist. Beispielsweise ist das Material des Reflektors 29 aus der Gruppe der Kunststoffe ausgewählt, wobei der Kunststoff bevorzugt eine helle Färbung aufweist. Insbesondere kann das Material des Reflektors 29 aus weißem oder hellgrauem Kunststoff gebildet sein, so dass helles bzw. weißes Licht vom Reflektor 29 in Richtung des Bandes 10 reflektiert wird. Gemäß einer weiteren vorteilhaften Ausführungsvariante ist der Reflektor 29 silberfärbig ausgebildet. Weiters kann die Reflexionsfläche 30 des Reflektors 29 matt oder aufgeraut ausgebildet sein, so dass es zu einer verstärkten Streuung von auftreffenden Lichtstrahlen kommt.

Die Beleuchtungseinrichtung 27 kann auch zur direkten Beleuchtung des Bandes 10 ausgebildet sein. Dabei kann der Diffusor 28 durch eine semitransparente Platte bzw. Schicht, beispielsweise aus Kunststoff, getrübtem Glas oder dergleichen, oder durch eine transparente Platte mit aufgerauter Oberfläche gebildet sein, die an einer Oberseite mit Licht bestrahlt wird, so dass an der Unterseite diffuses Licht in Richtung des Bandes 10 abgestrahlt wird.

Die Beleuchtung des Bandes 10 erfolgt bevorzugt durch eine großflächige Lichtquelle oder einen großflächigen Reflektor 29, um eine möglichst homogene Beleuchtung des Bandes 10 erzielen zu können.

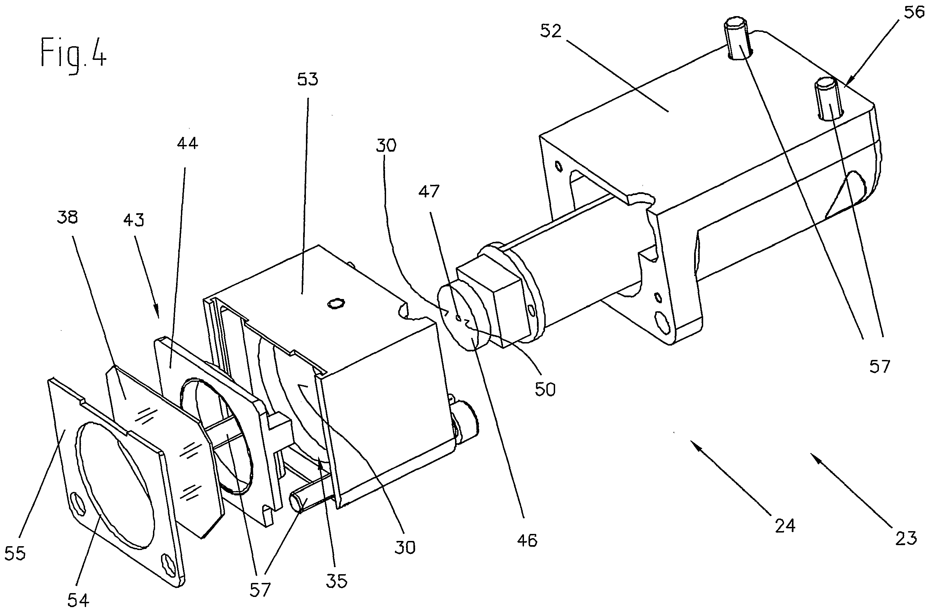

Gemäß dem in Fig. 3 und 4 gezeigten Ausführungsbeispiel weist die Reflexionsfläche 30 eine Wölbung 31 auf, welche einen Innenraum 32 kuppelartig umschließt. Die Beleuchtungseinrichtung 27 weist ein Gehäuse 33 mit einer Ausnehmung 34 auf, welche einen den Innenraum 32 mit der Reflexionsfläche 30 umschließenden Dom 35 bildet. Der Dom 35 weist in einem stirnseitigen Endbereich 36 eine Öffnung 37 auf, die mit einem insbesondere plattenförmigen Schutzelement 38, welches lichtdurchlässig bzw. transparent ausgebildet ist, verschlossen werden kann. Das an einer dem Dom 35 abgewandten Unterseite 39 des Schutzelements 38 positionierte Band 10 wird über die den Innenraum 32 des Doms 35 ausleuchtende Beleuchtungseinrichtung 27 beleuchtet, so dass vom Innenraum 32 aus eine Oberfläche 40 des Bandes 10 ersichtlich ist und das Abbild 20 von der Kamera 24 erfasst werden kann.

Weiters kann eine Reinigungsvorrichtung vorgesehen sein, welche beispielsweise durch einen Abstreifer, einen Druckluftstrahl oder dergleichen gebildet ist, und das Band 10 von Verunreinigungen im Bereich des Abbilds 20 befreit. Dadurch können Verunreinigungen des Schutzelements 38 verhindert werden, wodurch die Lichtdurchlässigkeit des Schutzelements 38 nicht beeinträchtigt wird.

Die Beleuchtungseinrichtung 27 weist eine Lichtquelle 41 auf, die bevorzugt durch zumindest eine Leuchtdiode 42 LED (Light Emitting Diode) gebildet ist. Bevorzugt bilden mehrere Leuchtdioden 42 einen LED-Ring 44. Der LED-Ring 44 kann beispielsweise aus zwei diametral gegenüberliegenden Leuchtdioden 42 bestehen. Bevorzugt weist der LED-Ring 44 zumindest drei, insbesondere mehr als fünf, Leuchtdioden 42 auf, die entlang eines Umfangs des LED-Rings 44 mit gleichem Abstand angeordnet sind. Die Leuchtdioden 42 des LED-Rings 44 sind bevorzugt zur Aussendung weißen Lichts ausgebildet. Ebenso können die Leuchtdioden 42 verschiedenfärbiges, insbesondere rotes, grünes, oder blaues Licht aussenden. Selbstverständlich kann der LED-Ring 44 beispielsweise auch durch ein LED-Array 43 gebildet sein.

Der LED-Ring 44 ist im Endbereich 36 bzw. im Bereich der Öffnung 37 des Doms 35 angeordnet und erstreckt sich kreis- bzw. ringförmig entlang eines Seitenbereichs 45 des Gehäuses 33. Die Leuchtdioden 42 sind dabei so angeordnet, dass diese Licht in Richtung der Reflexionsfläche 30 emittieren, d.h. es wird durch die Leuchtdioden 42 Licht in von einem Band 10 bzw. der Öffnung 37 abgewandter Richtung abgestrahlt. Durch entsprechende Maßnahmen wird eine seitliche Abstrahlung und dadurch eine Reflexion auf das Band 10 verhindert und gleichzeitig eine bessere Ausstrahlung des Lichtkegels erzielt. Durch die schirmartige Wölbung 31 der Reflexionsfläche 30 erfolgt eine diffuse Reflexion des Lichts und eine homogene Beleuchtung des Innenraums 32 bzw. des unter dem Innenraum 32 angeordneten Bandes 10. Der Dom 35 ist bevorzugt halbschalenförmig, insbesondere im Wesentlichen halbkugelförmig, ausgebildet.

Im erfindungsgemäßen Ausführungsbeispiel ist weiters vorgesehen, dass das Objektiv 26 der Kamera 24 durch ein Nadelloch- bzw. Pinhole-Objektiv 46 gebildet ist. Das Pinhole-Objektiv 46 weist ein Loch 47 mit geringem Durchmesser 48 auf, so dass in einfacher und kompakter Bauweise die Bildgröße des abgebildeten Gegenstands bzw. des Abbilds 20 festgelegt werden kann. Der Durchmesser 48 beträgt bevorzugt nur Bruchteile eines Millimeters bzw. wenige Millimeter, insbesondere 0,1 mm bis 5 mm, so dass ausschließlich das Abbild 20 am Erfassungsmittel 25 abgebildet wird. Hierzu ist das Pinhole-Objektiv 46 dem Band 10 gegenüberliegend und über einen Abstand 49 distanziert angeordnet. Der Abstand 49 bestimmt hierbei den Proportionalitätsfaktor, mit dem das Abbild 20 auf dem Erfassungsmittel 25 abgebildet wird. Weiters weist das Pinhole-Objektiv 46 eine Unterseite 50 auf, die diffus reflektierende Eigenschaften besitzt. Hierzu erstreckt sich an der Unterseite 50 des Phinole-Objektivs 46 bevorzugt ein entsprechend der vorstehenden Beschreibung ausgebildeter Reflektor 29 mit der Reflexionsfläche 30. Die Unterseite 50 bildet dadurch einen Bereich der Reflexionsfläche 30 aus, wodurch ausschließlich im Bereich des vergleichsweise einen geringen Querschnitt aufweisenden Lochs 47 keine Reflexion von durch die Lichtquelle 41 erzeugtem Licht erfolgt. Dieser nichtreflektierende Bereich ist jedoch so klein, dass es zu keinem sichtbaren bzw. verschwindend kleinen Spiegelbild der Kamera 24 am Band 10 kommt und eine homogene Beleuchtung des Abbilds 20 am Band 10 gegeben ist.

Im Ausführungsbeispiel ist das Pinhole-Objektiv 46 bevorzugt an einer Oberseite 51 bzw. einem Scheitelpunkt des Doms 35 angeordnet, so dass über das Erfassungsmittel 25 das Abbild 20 des unterhalb des Innenraums 32 angeordneten Bandes 10 erfasst werden kann. Durch eine derartige, senkrechte Anordnung des Pinhole-Objektivs 46 über dem Abbild 20 am Band 10 ist eine unverzerrte Aufnahme des Abbilds 20 in einer proportionalen Größe möglich, wodurch eine effiziente Verarbeitung der aufgenommenen Bildinformationen ermöglicht wird.

Wie in Fig. 4 gezeigt, kann das Gehäuse 33 aus mehreren Teilen, insbesondere einem Hauptgehäuse 52 und einem Domgehäuse 53, bestehen. Das Schutzelement 38 bzw. der LED-Ring 44 kann über einen einen Durchbruch 54 aufweisenden Befestigungsrahmen 55 über Befestigungselemente 56, insbesondere Schrauben 57, am Domgehäuse 53 fixiert sein.

Eine weitere, eigenständige Lösung der erfindungsgemäßen Aufgabe liegt in einem Schweißwerkzeug 1 für die Punktschweißanlage 3, insbesondere die Schweißzange 2. Das Schweißwerkzeug 1 weist die Haltearme 6 für die Elektroden 7 zum Widerstandsschweißen und die Positioniervorrichtung zur Führung bzw. Förderung eines Bandes 10 auf, das an der Elektrode 7 vorbeigeführt ist, wobei am Band 10 durch einen Punktschweißvorgang das Abbild 20 einer Schweißlinse erzeugbar ist, welches von der Auswertevorrichtung 22 analysierbar ist. Gemäß der eigenständigen Lösung ist die Auswertevorrichtung 22 zumindest teilweise entsprechend der vorstehenden Beschreibung ausgebildet.

Die Auswertevorrichtung 22 ist bevorzugt direkt an einem der Haltearme 6 angeordnet, wobei das mit dem Abbild 20 versehene Band 10 zur Auswertung an der Auswertevorrichtung 22 vorbeigeführt bzw. durch diese durchgeführt wird. Gemäß Fig. 1 weist der Haltearm 6 eine durch eine Krümmung oder einen Knick gebildete Abwinkelung 58 auf, wobei der Haltearm 6 insbesondere L-förmig ausgebildet ist. In einem an einer Innenseite 60 des Haltearms 6 liegenden Bereich 59 der Abwinkelung 58 ist die Auswertevorrichtung 22 angeordnet. An der Innenseite 60 wird das mit dem Abbild 20 versehene Band 10 nach einem Schweißvorgang vorbeigeführt, so dass unmittelbar nach dem Schweißvorgang eine Auswertung des Schweißergebnisses durchgeführt werden kann. Selbstverständlich kann die Auswertevorrichtung 22 an alle Geometrien der Haltearme 6 angepasst werden, so dass die optische Qualitätsprüfung von Punktschweißverbindungen mit der erfindungsgemäßen Auswertevorrichtung 22 ermöglicht wird. Beispielsweise ist es auch möglich, dass die Auswertevorrichtung 22 in einem oder auch beiden Haltearmen 6 integriert wird und dementsprechend das Band 10 wiederum an der Auswertevorrichtung 22 vorbeigeführt wird. Vorteilhaft dabei ist, dass durch die Auswertevorrichtung 22 in keiner Weise die Zugänglichkeit bzw. die Bewegungsfreiheit der Punktschweißanlage 3 eingeschränkt wird.

Das Schweißwerkzeug 1 bzw. die Punktschweißanlage 3 weist hierzu eine Positioniervorrichtung 61 für das Band 10 auf. Die Positioniervorrichtung 61 ist gemäß dem gezeigten Ausführungsbeispiel zur Verschiebung des um die Elektrode 7 geführten Bandes 10 ausgebildet, wobei diese Verschiebung beispielsweise taktweise um einen definierten Vorschub nach jedem durchgeführten Schweißprozess erfolgt. Hierzu weist die Positionierungsvorrichtung 61 einen Antrieb 62 auf, der insbesondere durch eine Steuervorrichtung der Punktschweißanlage 3 steuerbar ist. Bei Verschiebung des Bandes 10 bewegt sich dieses in Richtung der Pfeile 63a bzw. 63b, so dass das Band 10 an der Auswertevorrichtung 22 vorbeigeführt wird. Das Band 10 kann beispielsweise unterhalb der Öffnung 37 des Doms 35 angeordnet werden, so dass die Kamera 24 das Abbild 20 aufzeichnen kann. Das Band 10 wird dabei über den Führungskanal 15 bzw. weitere Führungselemente eng an der Oberfläche 11 des Haltearms 6 vorbeigeführt. Nachdem das Band 10 an der Auswertevorrichtung 22 vorbeigeführt wurde, kann dieses in beliebiger Weise weitergefördert werden, beispielsweise entlang der Oberfläche 11 des Haltearms 6, oder durch eine Führung quer durch den Haltearm 6, wie in strichlierten Linien in Fig. 1 gezeigt.

Bevorzugt erfolgt die Bildaufnahme derart, dass über die Positionierungsvorrichtung 61 das Band 10 an der Auswertevorrichtung 22 vorbeigefördert wird, wobei von der Kamera 24 eine automatische Aufnahme des Abbilds 20 durchgeführt wird. Das heißt, dass das Band 10 lediglich an der Kamera 24 vorbeigezogen wird und gleichzeitig kontinuierlich eine Aufnahme der Oberfläche des Bandes 10 und somit des Schweißpunktes 19 erfolgt. Somit ist eine exakte Positionierung des Schweißpunktes 19 vor der Kamera 24 nicht mehr notwendig, da die Auswertelogik aufgrund der erhaltenen Bildinformationen das optimale Bild des Schweißpunktes 19 zur Analyse heranzieht.

Somit kann unmittelbar nach Durchführung des Schweißprozesses eine Analyse des Bandes 10 vorgenommen werden, wobei dies völlig automatisiert erfolgen kann. Das Band 10 muss hierbei nicht an eine separat zum Schweißwerkzeug 1 ausgebildete Arbeitsstation gebracht werden, sondern das Band 10 kann unmittelbar nach dem Schweißprozess und der durchgeführten Analyse seinem weiteren Bestimmungsort zugeführt werden.

Weiters kann die Auswertevorrichtung 22 an einer externen Vorrichtung/Arbeitsstation angeordnet und nicht an zumindest einem der Haltearme 6 montiert werden. Um eine Auswertung des Schweißpunktes 19 durchführen zu können, wird nach vollständigem Verbrauch des Bandes 10 dieses aus der Schweißzange 2 ausgebaut und in die Vorrichtung/Arbeitsstation eingelegt, worauf anschließend die einzelnen Abbilder ausgewertet werden. Eine Zuordnung der Schweißpunkte 19 ist durch die Reihenfolge der Punktschweißungen gegeben, so dass fehlerhafte Schweißpunkte 19 jederzeit identifiziert und nachbearbeitet werden können.

Im Allgemeinen sei angemerkt, dass jeder der Haltearme 6 mit einer eigenen Auswertevorrichtung 22 ausgestattet sein kann, so dass beispielsweise unterschiedliche Bänder 10, welche auf unterschiedliche Materialien der Bleche 4, 5 abgestimmt sein können, für jeden Haltearm 6 separat durch die jeweilige Auswertevorrichtung 22 verarbeitet werden können. Im gezeigten Ausführungsbeispiel weist das Schweißwerkzeug 1 jedoch nur eine Auswertevorrichtung 22 auf, welche das dem Blech 4 zugeordnete Band 10 auswertet.

Es können die einzelnen in den Fig. 1 bis 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Schweißwerkzeug (1) für eine Punktschweißanlage (3), insbesondere Schweißzange (2), mit zumindest einem Haltearm (6) für eine Elektrode (7) zum Widerstandsschweißen, und einer Positioniervorrichtung (61) für ein an der Elektrode (7) vorbeiführbares Band (10) zur Erzeugung eines Abbilds (20) eines Schweißpunktes (19), mit einer Auswertevorrichtung (22) zur Analyse des Abbilds (20) des Schweißpunktes (19) mit einer optischen Bilderfassungseinheit (23), umfassend eine zumindest aus einem Erfassungsmittel (25) und einem Objektiv (26) bestehende Kamera (24), **dadurch gekennzeichnet, dass** die Bilderfassungseinheit (23) eine Beleuchtungseinrichtung (27) mit einem Diffusor (28) zur diffusen und homogenen Beleuchtung des Abbilds (20) auf dem Band (10) aufweist, wobei die Beleuchtungseinrichtung (27) zur indirekten Beleuchtung des Bandes (10) in Richtung der Kamera (24) ausgerichtet ist und eine Lichtquelle (41) aufweist, die für eine großflächige Bestrahlung des Bandes (10) angeordnet ist, wobei der Diffusor (28) einen Reflektor (29) aufweist, der an einer Reflexionsfläche (30) die von der Lichtquelle (41) erzeugten Lichtstrahlen in Richtung des Bandes (10) reflektiert.

2. Schweißwerkzeug (1) nach Anspruch 1, **dadurch gekennzeichnet, dass** der Reflektor (29) aus einem lichtundurchlässigen bzw. opaken Material gebildet ist, welches einen niedrigen Absorptionsgrad für sichtbare Strahlung aufweist.

3. Schweißwerkzeug (1) nach Anspruch 2, **dadurch gekennzeichnet, dass** das Material des Reflektors (29) aus der Gruppe der Kunststoffe ausgewählt ist.

4. Schweißwerkzeug (1) nach einem der Ansprüche 1 bis 3, **dadurch gekennzeichnet, dass** die Reflexionsfläche (30) hell gefärbt ist bzw. hell reflektierende Eigenschaften aufweist.

5. Schweißwerkzeug (1) nach einem der Ansprüche 1 bis 4, **dadurch gekennzeichnet, dass** die Reflexionsfläche (30) weiß, insbesondere mattweiß, ausgebildet ist.

6. Schweißwerkzeug (1) nach einem der Ansprüche 1 bis 4, **dadurch gekennzeichnet, dass** die Reflexionsfläche (30) silberfarbig, insbesondere mattsilberfarbig, ausgebildet ist.

7. Schweißwerkzeug (1) nach einem der Ansprüche 1 bis 6, **dadurch gekennzeichnet, dass** die Reflexionsfläche (30) zumindest bereichsweise eine Wölbung (31) aufweist und einen Innenraum (32) kuppelartig umschließt.

8. Schweißwerkzeug (1) nach Anspruch 7, **dadurch gekennzeichnet, dass** die Reflexionsfläche (30) mit der Wölbung (31) eine Ausnehmung (34) in einem einen Dom (35) bildenden Gehäuse (33) begrenzt.

9. Schweißwerkzeug (1) nach Anspruch 8, **dadurch gekennzeichnet, dass** der Dom (35) im Wesentlichen halbschalenförmig ausgebildet ist, wobei sich die an der Wand des Domes (35) befindliche Reflexionsfläche (30) vorzugsweise im Wesentlichen halbkugelförmig erstreckt.

10. Schweißwerkzeug (1) nach Anspruch 8 oder 9, **dadurch gekennzeichnet, dass** der Dom (35) an einer der Reflexionsfläche (30) gegenüberliegenden Unterseite (39) eine Öffnung (37) aufweist, in deren Bereich das Band (10) vorbeigeführt werden kann.

11. Schweißwerkzeug (1) nach einem der Ansprüche 8 bis 10, **dadurch gekennzeichnet, dass** der Reflektor (29) durch das Material des Gehäuses (33) gebildet ist.

12. Schweißwerkzeug (1) nach einem der Ansprüche 8 bis 11, **dadurch gekennzeichnet, dass** der Reflektor (29) auf eine Innenseite des Gehäuses (33) als Beschichtung oder Lackierung aufgebracht ist.

13. Schweißwerkzeug (1) nach einem der Ansprüche 1 bis 12, **dadurch gekennzeichnet, dass** die Lichtquelle (41) der Reflexionsfläche (30) im Bereich der Wölbung (31) gegenüberliegend angeordnet ist.

14. Schweißwerkzeug (1) nach einem der Ansprüche 1 bis 13, **dadurch gekennzeichnet, dass** die Lichtquelle (41) durch zumindest eine Leuchtdiode (42), bevorzugt einen LED-Ring (44) aus mehreren Leuchtdioden (42), gebildet ist.

15. Schweißwerkzeug (1) nach Anspruch 14, **dadurch gekennzeichnet, dass** der LED-Ring (44) durch zumindest drei kreisförmig angeordnete Leuchtdioden (42) gebildet ist, die in einem Seitenbereich (45) des Doms (35) angeordnet sind.

16. Schweißwerkzeug (1) nach einem der Ansprüche 1 bis 15, **dadurch gekennzeichnet, dass** die Bilderfassungseinheit (23) ein Nadelloch- bzw. Pinhole-Objektiv (46) mit einem Loch (47) umfasst.

17. Schweißwerkzeug (1) nach Anspruch 16, **dadurch gekennzeichnet, dass** das Loch (47) des Pinhole-Objektivs (26) vom Reflektor (29) mit der Reflexionsfläche (30) umgeben ist.

18. Schweißwerkzeug (1) nach einem der Ansprüche 8 bis 17, **dadurch gekennzeichnet, dass** das Objektiv (26) der Kamera (24) an einer dem Band (10) gegenüberliegenden Oberseite (51) des Doms (35) angeordnet ist.

19. Schweißwerkzeug (1) nach einem der Ansprüche 1 bis 18, **dadurch gekennzeichnet, dass** vor der Bilderfassungseinheit (23) ein transparentes Schutzelement (38), beispielsweise aus Kunststoff oder Glas, zum Schutz der Bilderfassungseinheit (23) vor Verunreinigungen angeordnet ist.

20. Schweißwerkzeug (1) nach einem der Ansprüche 1 bis 19, **dadurch gekennzeichnet, dass** die Auswertevorrichtung (22) an einer Innenseite (60) des Haltearms (6), an der das mit dem Abbild (20) versehene Band (10) nach einem Schweißvorgang vorbeigeführt wird, angeordnet ist.

21. Schweißwerkzeug (1) nach einem der Ansprüche 1 bis 20, **dadurch gekennzeichnet, dass** der Haltearm (6) in an sich bekannter Weise L-förmig ausbildet ist und eine Abwinkelung (58) aufweist, und dass die Auswertevorrichtung (22) in einem Bereich (59) dieser Abwinkelung (58) angeordnet ist.

## Claims

1. A welding tool (1) for a spot-welding plant (3), in particular a welding gun (2), including at least one retention arm (6) for an electrode (7) provided for resistance welding, and including a positioning unit (61) for a tape (10) which can be guided past the electrode (7), provided for producing an image (20) of a weld spot (19), with an evaluation device (22) for analyzing the image (20) of the weld spot (19) using an optical image-detecting unit (23), comprising a camera (24) which consists of at least one detection means (25) and one lens (26), **characterized in that** the image-detecting unit (23) has an illumination device (27) with a diffusor (28) for diffusively and homogeneously illuminating the image (20) on the tape (10), wherein the illumination device (27) is configured for indirect illumination of the tape (10) in the direction of the camera (24) and has a light source (41) arranged for large-area illumination of the band (10), wherein the diffusor (28) comprises a reflector (29) which, at a reflection surface (30), reflects the light beams generated by the light source (41) in the direction of the tape (10).

2. The welding tool (1) according to claim 1, **characterized in that** the reflector (29) is comprised of a light-impermeable and/or opaque material which has a low degree of absorption for visible radiation.

3. The welding tool (1) according to claim 2, **characterized in that** the material of the reflector (29) is selected from the group of plastics.

4. The welding tool (1) according to any one of claims 1 to 3, **characterized in that** the reflection surface (30) is bright-colored and/or has brightly reflecting properties.

5. The welding tool (1) according to any one of claims 1 to 4, **characterized in that** the reflection surface (30) is white, in particular matt white.

6. The welding tool (1) according to any one of claims 1 to 4, **characterized in that** the reflection surface (30) is silver-colored, in particular matt-silver.

7. The welding tool (1) according to any one of claims 1 to 6, **characterized in that** the reflection surface (30) has at least partially a curvature (31) and encloses an interior (32) in a dome-like manner.

8. The welding tool (1) according to claim 7, **characterized in that** the reflection surface (30) with the curvature (31), delimits a recess (34) in a housing (33) which forms a dome (35).

9. The welding tool (1) according to claim 8, **characterized in that** the dome (35) substantially has the form of a half-shell, wherein the reflection surface (30) present on the wall of the dome (35) extends in a preferably half-spherical manner.

10. The welding tool (1) according to claim 8 or 9, **characterized in that** the dome (35), on a lower side (39) opposing the reflection surface (30), has an opening (37), in the region of which the tape (10) may be guided past.

11. The welding tool (1) according to any one of claims 8 to 10, **characterized in that** the reflector (29) is comprised of the material of the housing (33).

12. The welding tool (1) according to any one of claims 8 to 11, **characterized in that** the reflector (29) is applied onto an inner side of the housing (33) to serve as a coating or lacquer coat.

13. The welding tool (1) according to any one of claims 1 to 12, **characterized in that** the light source (41) is arranged to oppose the reflection surface (30) in the region of the curvature (31).

14. The welding tool (1) according to any one of claims 1 to 13, **characterized in that** the light source (41) is comprised of at least one light-emitting diode (42), preferably an LED ring (44) consisting of several light-emitting diodes (42).

15. The welding tool (1) according to claim 14, **characterized in that** the LED ring (44) is comprised of at least three circularly arranged light-emitting diodes (42), which are located in a side region (45) of the dome (35).

16. The welding tool (1) according to any one of claims 1 to 15, **characterized in that** the image-detecting unit (23) has a pinhole lens (46) including a hole (47).

17. The welding tool (1) according to claim 16, **characterized in that** the hole (47) of the pinhole lens (26) is surrounded by the reflector (29) with the reflection surface (30).

18. The welding tool (1) according to any one of claims 8 to 17, **characterized in that** the lens (26) of the camera (24) is arranged on an upper side (51) of the dome (35) opposing the tape (10).

19. The welding tool (1) according to any one of claims 1 to 18, **characterized in that** a transparent protective element (38), e.g. made of plastics or glass, is provided in front of the image-detecting unit (23) so as to protect the image-detecting unit (23) from contaminations.

20. The welding tool (1) according to any one of claims 1 to 19, **characterized in that** the evaluation device (22) is arranged on an inner side (60) of the retention arm (6), with the tape (10), which is provided with the image (20), being guided past this inner side (60) after a welding process has been finished.

21. The welding tool (1) according to any one of claims 1 to 20, **characterized in that** the retention arm (6) is formed in an L-type manner as known per se and has a bending (58), and **in that** the evaluation device (22) is arranged in a region (59) of the bending (58).

## Revendications

1. Outil de soudure (1) pour une installation de soudure par points (3), plus particulièrement pince à souder (2), avec au moins un bras de maintien (6) pour une électrode (7) pour la soudure par résistance, et un dispositif de positionnement (61) pour une bande (10) pouvant être passée devant l'électrode (7) afin de produire une image (20) d'un point de soudure (19), avec un dispositif d'analyse (22) pour analyser l'image (20) du point de soudure (19) avec une unité de détection d'images optiques (23), comprenant une caméra (24) constituée d'au moins un moyen de détection (25) et d'un objectif (26), **caractérisé en ce que** l'unité de détection d'images (23) comprend un dispositif d'éclairage (27) avec un diffuseur (28) pour éclairer de manière diffuse et homogène l'image (20) sur la bande (10), le dispositif d'éclairage (27) étant conçu pour l'éclairage indirect de la bande (10) en direction de la caméra (24) et comprenant une source de lumière (41), qui est disposée pour une irradiation sur une grande surface de la bande (10), le diffuseur (28) comprenant un réflecteur (29) réfléchissant, au niveau d'une surface de réflexion (30), les rayons lumineux générés par la source de lumière (41) en direction de la bande (10).

2. Outil de soudure (1) selon la revendication 1, **caractérisé en ce que** le réflecteur (29) est constitué d'un matériau non transparent ou opaque qui présente un faible taux d'absorption du rayonnement visible.

3. Outil de soudure (1) selon la revendication 2, **caractérisé en ce que** le matériau du réflecteur (29) est sélectionné dans le groupe des matières plastiques.

4. Outil de soudure (1) selon l'une des revendications 1 à 3, **caractérisé en ce que** la surface de réflexion (30) est de couleur claire ou présente des propriétés réfléchissantes.

5. Outil de soudure (1) selon l'une des revendications 1 à 4, **caractérisé en ce que** la surface de réflexion (30) est blanche, plus particulièrement blanc mat.

6. Outil de soudure (1) selon l'une des revendications 1 à 4, **caractérisé en ce que** la surface de réflexion (30) est de couleur argentée, de préférence de couleur argentée mate.

7. Outil de soudure (1) selon l'une des revendications 1 à 6, **caractérisé en ce que** la surface de réflexion (30) présente, au moins sur une zone, un bombement (31) et entoure un espace interne (32) à la manière d'une coupole.

8. Outil de soudure (1) selon la revendication 7, **caractérisé en ce que** la surface de réflexion (30) avec le bombement (31) délimite un évidement (34) dans un boîtier (33) formant un dôme (35).

9. Outil de soudure (1) selon la revendication 8, **caractérisé en ce que** le dôme (35) présente globalement la forme d'une demi-coque, la surface de réflexion (30) se trouvant sur la paroi du dôme (35) s'étendant de préférence globalement sous la forme d'une demi-sphère.

10. Outil de soudure (1) selon la revendication 8 ou 9, **caractérisé en ce que** le dôme (35) présente, au niveau d'un côté inférieur (39), opposé à la surface de réflexion (30), une ouverture (37) au niveau de laquelle la bande (10) peut être passée.

11. Outil de soudure (1) selon l'une des revendications 8 à 10, **caractérisé en ce que** le réflecteur (29) est constitué du matériau du boîtier (33).

12. Outil de soudure (1) selon l'une des revendications 8 à 11, **caractérisé en ce que** le réflecteur (29) est appliqué sur un côté intérieur du boîtier (33) en tant que revêtement ou peinture.

13. Outil de soudure (1) selon l'une des revendications 1 à 12, **caractérisé en ce que** la source de lumière (41) de la surface de réflexion (30) est disposée en face au niveau du bombement (31).

14. Outil de soudure (1) selon l'une des revendications 1 à 13, **caractérisé en ce que** la source de lumière (41) est constituée d'au moins une diode électroluminescente (42), de préférence d'un anneau de LED (44) constitué de plusieurs diodes électroluminescentes (42).

15. Outil de soudure (1) selon la revendication 14, **caractérisé en ce que** l'anneau de LED (44) est constitué d'au moins trois diodes électroluminescentes (42) disposées en cercle, disposées dans une zone latérale (45) du dôme (35).

16. Outil de soudure (1) selon l'une des revendications 1 à 15, **caractérisé en ce que** l'unité de détection d'image (23) comprend un objectif à trou d'aiguille (46) avec un trou (47).

17. Outil de soudure (1) selon la revendication 16, **caractérisé en ce que** le trou (47) de l'objectif à trou d'aiguille (26) est entouré par le réflecteur (29) avec la surface de réflexion (30).

18. Outil de soudure (1) selon l'une des revendications 8 à 17, **caractérisé en ce que** l'objectif (26) de la caméra (24) est disposé au niveau d'un côté supérieur (51) du dôme (35), opposé à la bande (10).

19. Outil de soudure (1) selon l'une des revendications 1 à 18, **caractérisé en ce que**, avant l'unité de détection d'images (23), se trouve un élément de protection transparent (38), par exemple en matière plastique ou en verre, pour protéger l'unité de détection d'image (23) contre les impuretés.

20. Outil de soudure (1) selon l'une des revendications 1 à 19, **caractérisé en ce que** le dispositif d'analyse (22) est disposé au niveau d'un côté intérieur (60) du bras de maintien (6), au niveau duquel la bande (10) munie de l'image (20) est passée après un processus de soudure.

21. Outil de soudure (1) selon l'une des revendications 1 à 20, **caractérisé en ce que** le bras de maintien (6) est conçu, de manière connue, en forme de L et comprend un angle (58) et **en ce que** le dispositif d'analyse (22) est disposé dans une zone (59) de cet angle (58).
